# EUROPÄISCHE PATENTANMELDUNG

(11) **EP 1 398 237 A1**
(43) Veröffentlichungstag der Anmeldung: **17.03.2004**
(21) Anmeldenummer: 03011319.5
(22) Anmeldetag: 19.05.2003
(51) Int. Cl.: B60T 17/22, F15B 1/00, B60T 8/88

(54) **Verfahren und Bremssystem mit Steuergerät zur Speicherüberwachung in einem Speicherladesystem**

(30) Priorität: 12.09.2002 DE 10242248
(71) Anmelder: ROBERT BOSCH GMBH, 70442 Stuttgart (DE)
(72) Erfinder: Siegel, Heinz, 70435 Stuttgart (DE)

(57) **Zusammenfassung**

Es wird ein Verfahren zur Speicherüberwachung in einem Speicherladesystem (12) eines Bremssystems (10) und ein solches Bremssystem (10) beschrieben. Des weiteren wird ein Computerprogramm und ein Computerprogrammprodukt zur Durchführung des Verfahrens vorgestellt. Bei dem Verfahren wird ein Einlaßventil (22) angesteuert und mit einem Drucksensor (20) überprüft, ob das Ansteuern einen Druckeinbruch in dem Speicherladesystem (12) bewirkt.

## Beschreibung

Die Erfindung betrifft ein Verfahren zur Speicherüberwachung in einem Speicherladesystem eines Bremssystems und ein solches Bremssystem. Des weiteren betrifft die Erfindung ein Computerprogramm und ein Computerprogrammprodukt zur Durchführung des erfindungsgemäßen Verfahrens.

### Stand der Technik

Bei Speicherladesystemen, wie sie bspw. in Bremssystemen eingesetzt werden, ist es zur Gewährleistung des sicheren Betriebs unumgänglich, die einwandfreie Betriebsbereitschaft des Systems regelmäßig zu überprüfen.

Bei in Bremssystemen verwendeten Metallfaltenbalgspeichern kann bspw. eine Materialermüdung eine Undichtigkeit in dem metallische Faltenbalg bewirken. Ein Speicherfaltenriß führt dazu, daß Gas in den Bremskreis gelangt, was im Falle eines sogenannten Back-up zu einem weichen Bremspedal und einer unzureichenden Bremswirkung führt.

In der DE 100 30 437 A1 ist ein Hydraulikenergiespeicher mit einem Gehäuse, das einen Einbauraum für einen metallischen Faltenbalg aufweist, beschrieben. Der metallische Faltenbalg hat ein unbewegliches und ein bewegliches Ende, wobei das bewegliche Ende eine abgedichtete Stirnwand aufweist und trennt hydraulisch ein Druckmittel von einem unter Druck eingeschlossenen Gas. Dabei wird der beschriebene Faltenbalg durch einen Endlage- bzw. Wegsensor überwacht. Aufgrund des zusätzlich benötigten Sensors ist dies jedoch mit erheblichen Kosten verbunden.

### Vorteile der Erfindung

Demgegenüber ist bei dem erfindungsgemäßen Verfahren zur Speicherüberwachung in einem Speicherladesystem eines Bremssystems vorgesehen, daß in einer zusätzlichen Prüfroutine ein Einlaßventil des Bremssystems angesteuert und mit einem Drucksensor überprüft wird, ob das Ansteuern einen Druckeinbruch in dem Speicherladesystem bewirkt.

Somit ist es möglich, mit dem bereits vorhandenen Drucksensor zu überprüfen, ob ein Fehler in dem Speicherladesystem vorliegt. Es wird lediglich eine Prüfroutine hinzugefügt, ein zusätzlicher teurer Wegsensor ist nicht erforderlich.

Das erfindungsgemäße Verfahren kann beim Starten des Fahrzeugs oder auch während der Fahrt durchgeführt werden. Während der Fahrt erfolgt die Überwachung nach Ende eines Bremsvorgangs oder während eines Bremsvorgangs.

Als Speicherladesysteme in Bremssystemen haben sich Metallfaltenbalgspeicher bewährt. Mit dem erfindungsgemäßen Verfahren ist es möglich festzustellen, ob der Metallfaltenbalg des Metallfaltenbalgspeichers gerissen ist.

Zweckmäßigerweise erfolgt bei Feststellen eines Druckeinbruchs eine Servoabschaltung des Bremssystems.

Der Drucksensor kann eine Eigenüberwachung haben, um Drucksensorfehler auszuschließen. Alternativ dazu können auch zwei Drucksensoren verwendet werden.

Das erfindungsgemäße Bremssystem weist ein Steuergerät, ein Speicherladesystem, ein Einlaßventil, eine Pumpe und einen Drucksensor auf. Das Steuergerät ist so ausgelegt, daß dieses das Einlaßventil ansteuert und mittels des Drucksensors überwacht, ob das Ansteuern einen Druckabfall in dem Speicherladesystem bewirkt.

Als Speicherladesystem dient vorzugsweise ein Metallfaltenbalgspeicher.

Der Drucksensor kann eine Eigenüberwachung aufweisen oder es werden zwei Drucksensoren verwendet.

Das erfindungsgemäße Computerprogramm weist Programmcodemittel auf, um alle Schritte eines vorstehend beschriebenen Verfahrens durchzuführen. Das Computerprogramm wird auf einem Computer oder einer Recheneinheit, insbesondere einer elektronischen Recheneinheit in einem Steuergerät eines Bremssystems, ausgeführt.

Das erfindungsgemäße Computerprogrammprodukt umfaßt eben diese Programmcodemittel und ist auf einem computerlesbaren Datenträger gespeichert.

Weitere Vorteile und Ausgestaltung der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnung

Die Erfindung ist anhand von Ausführungsbeispielen in der Zeichnung dargestellt und wird im folgenden unter Bezugnahme auf die Zeichnung näher erläutert.
- Figur 1: zeigt einen Schaltplan einer bevorzugten Ausführungsform des erfindungsgemäßen Bremssystems.
- Figur 2: zeigt ein Speicherladesystem.
- Figur 3: zeigt eine bevorzugte Ausführungsform des erfindungsgemäßen Verfahrens beim Start eines Fahrzeugs.
- Figur 4: zeigt eine bevorzugte Ausführungsform des erfindungsgemäßen Verfahrens während der Fahrt.
- Figur 5: zeigt eine bevorzugte Ausführungsform des erfindungsgemäßen Verfahrens bei mehrmaligem kurzeitigen Bremsen.

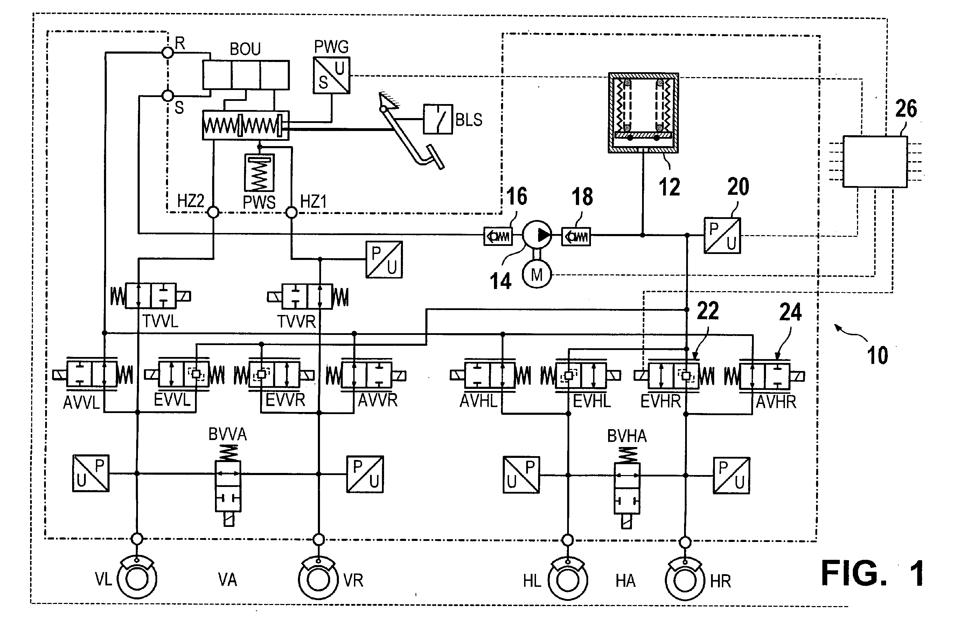

In Figur 1 ist ein Schaltplan einer bevorzugten Ausführungsform des erfindungsgemäßen Bremssystems, insgesamt mit der Bezugsziffer 10 bezeichnet, wiedergegeben.

Zu erkennen ist ein Ladespeicher 12 , in diesem Fall ein Metallfaltenbalgspeicher 12 und eine Ladepumpe 14 mit zugeordnetem Motor (M), die über ein Einlaßrückschlagventil 16 und ein Auslaßrückschlagventil 18 verfügt. Des weiteren ist ein Drucksensor 20 sowie ein Einlaßventil 22 und ein Auslaßventil 24, die vorzugsweise als Magnetventile ausgebildet sind, dargestellt. Die beiden Ventile 22 und 24 sind dem hinteren Rechten Rad HR zugeordnet.

Die Figur zeigt weiterhin ein Steuergerät 26, ein Pedalweggeber PWG, eine Bremsbetätigungseinheit (BOU: braking operating unit), ein Pedalwegsimulator PWS, Trennventile TVVL und TVVR sowie ein Balanceventil BVVA für die Vorderachse VA und ein Balanceventil BVHA für die Hinterachse HA.

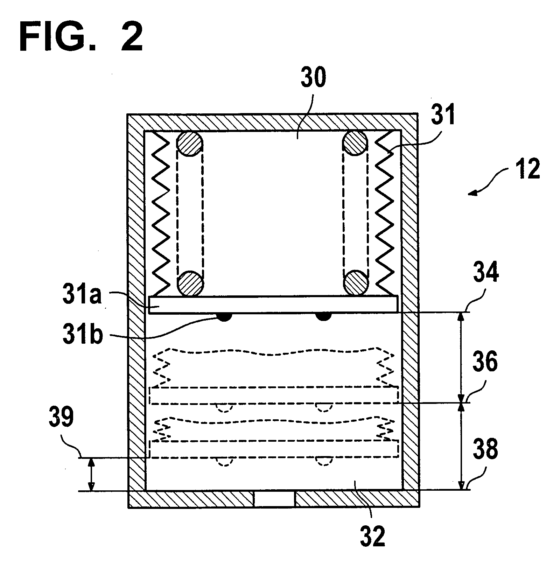

In Figur 2 ist der Metallfaltenbalgspeicher 12 in einer schematischen Ansicht dargestellt. Mit der Bezugsziffer 30 ist die Gasseite, mit Bezugsziffer 31 eine Metallfaltenbalg und mit Bezugsziffer 32 die Bremsflüssigkeitsseite bezeichnet.

In der Darstellung sind die unterschiedlichen Stellungen verdeutlicht. Bezugsziffer 34 kennzeichnet den aufgeladenen Zustand des Metallfaltenbalgspeicher 12, d.h. den aufgeladenen Zustand bei bspw. 160 bar. Hierbei ist im nicht gebremsten Zustand der Speicher 12 über das stromlos geschlossene Einlaßventil 22 und die Rückschlagventile 16 und 18 der Pumpe 14 abgesperrt. Wird bei einem Bremsvorgang dem Speicher 12 Bremsflüssigkeit entnommen, fällt der Speicherdruck ab. Bei Erreichen einer mit der Bezugsziffer 36 bezeichneten Stellung des unteren Ladedrucks wird der Speicher 12 über die Pumpe 14 wieder aufgeladen.

Die mit der Bezugsziffer 38 bezeichnete Speichereinstellung, bedeutet einen Anschlag am Speicherboden und kann nur dann erreicht werden, wenn äußerst viel Bremsflüssigkeit kurz hintereinander benötigt wird, wenn sich bei langem Stillstand der Speicher 12 entleert, durch Leckage an den Absperrventilen 22 und/oder den Rückschlagventilen 16 und 18, oder wenn der Metallfaltenbalg 31 des Speichers 12 gerissen ist. In diesem Fall wird der Metallfaltenbalg 31 durch die eigene Rückstellkraft und diejenige einer Druckfeder in die Endlage 38 gedrückt. In der Endstellung 38 dichtet der Metallfaltenbalgboden 31a durch die Richtung 31b zum Speicherauslaß hin ab. In der Figur bezeichnet Bezugsziffer 39 außerdem eine Zwischenstellung.

Die erfindungsgemäß vorgesehene zusätzliche Prüfroutine erkennt nunmehr, welcher der möglichen Fälle vorliegt, und gibt somit an, ob der Metallfaltenbalg 31 gerissen ist und infolge dessen der Stromkreis abgeschaltet werden muß.

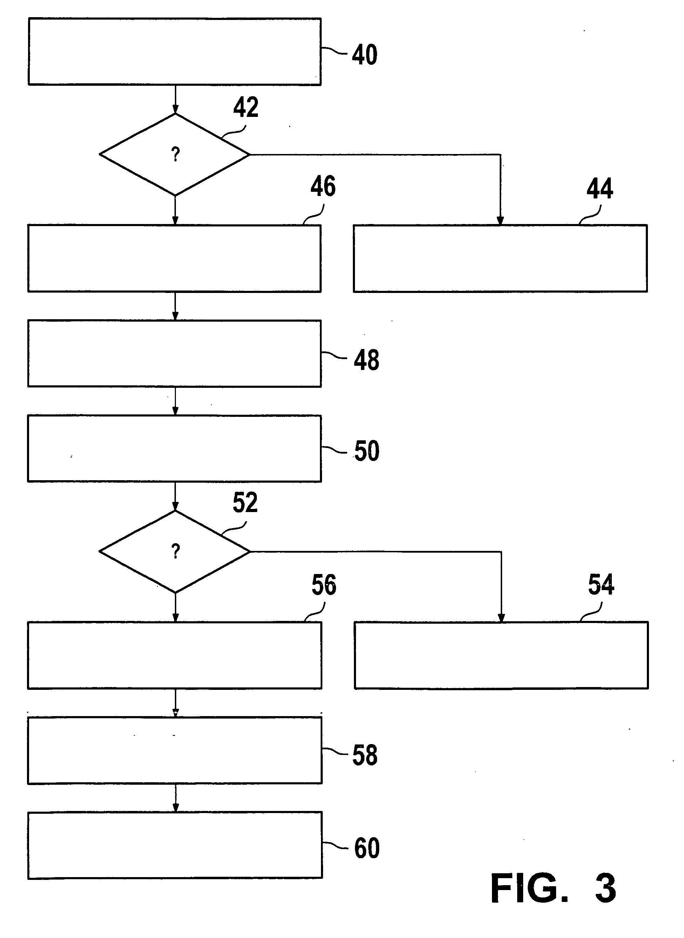

In Figur 3 ist der Ablauf einer bevorzugten Ausführungsform des erfindungsgemäßen Verfahrens dargestellt. Dabei erfolgt die Überprüfung des Speichers 12 beim Start eines Fahrzeugs.

Durch den langen Stillstand hat sich der Speicher 12 möglicherweise aufgrund von Leckagen an den Absperrventilen 22 und den Pumpenrückschlagventilen 16 und 18 entleert. Der Metallfaltenbalg befindet sich dann in der Endlage 38.

Nach einem kurzes Ansteuern des Einlaßventils 22 in einem Schritt 40 wird in einem Schritt 42 überprüft, ob der Druck abfällt. Ist dies nicht der Fall, kann in einem Schritt 44 festgestellt werden, daß der Speicher 12 funktionsfähig ist.

Wird in einem Schritt 46 festgestellt, daß der Druck schlagartig nach unten fällt, ist hierfür die Ursache, daß keine Bremsflüssigkeit aus dem Speicher 12 zur Verfügung steht.

Dann wird in einem Schritt 48 über den Motor M die Pumpe 14 kurz, bspw. für ca. 500 bis 1000 ms, angesteuert, währenddessen das Einlaßventil 22 wieder geschlossen ist. Der Speicher 12 wird dabei wieder mit Bremsflüssigkeit geladen, so daß der Metallfaltenbalg 31 aus der Endlage 38 in die Zwischenstellung 39 gelangt.

Anschließend wird in einem Schritt 50 wiederum das Einlaßventil 22 kurz angesteuert, bspw. für 200 bis 300 ms. In einem Schritt 52 wird erneut überprüft, ob der Druck an dem Drucksensor 20 zusammenbricht. Ist dies nicht der Fall, wird in einem Schritt 54 festgestellt, daß der Speicher 12 funktionsfähig ist, also der Speicher 12 beim Start bspw. durch Leckagen entleert war.

Wird in dem Schritt 52 festgestellt, daß der Druck wiederum stark abfällt (Schritt 56), wird in einem Schritt 58 erkannt, daß der Speicher 12 nicht funktionsfähig ist, da der Metallfaltenbalg 31 gerissen ist und sich in der Endlage 38 befindet. Der Druck in dem Speicher 12 bleibt erhalten, auch wenn Bremsflüssigkeit in die Gasseite 30 eindringt. Durch den Innendruck und die Rückstellkraft des Metallfaltenbalgs 31 und der Druckfeder verbleibt der Metallfaltenbalg 31 jedoch in der Endlage 38 und sperrt den Speicherauslaß ab. Anschließend erfolgt dann aus Sicherheitsgründen in einem Schritt 60 eine Servoabschaltung; d.h. die Bremsen sind im Back-up. Man möchte auf jeden Fall verhindern, daß Gas aus dem Speicher in den Bremskreis gelangt und das Bremssystem bremsunfähig wird.

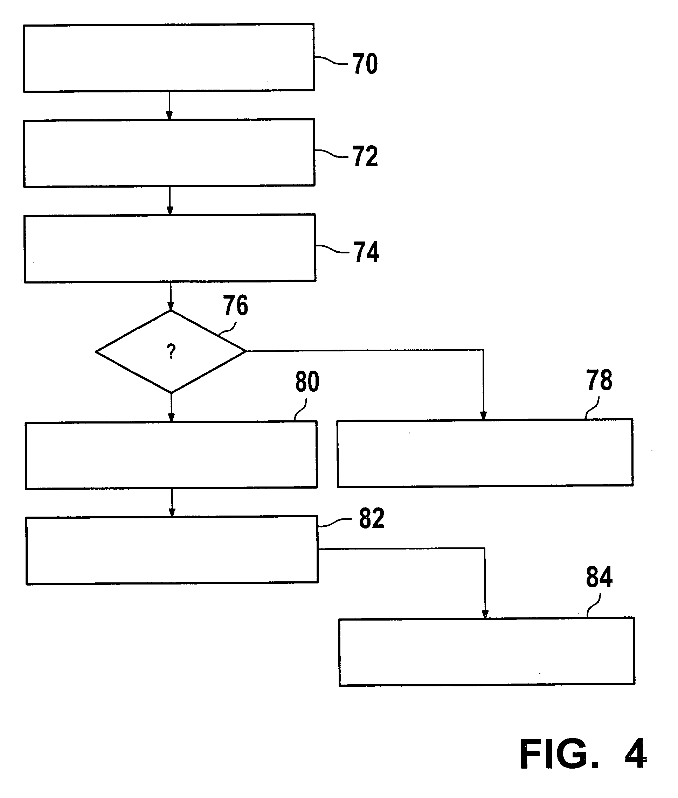

In Figur 4 ist der Ablauf des erfindungsgemäßen Verfahrens bei einer Überwachung während der Fahrt wiedergegeben.

In einem Schritt 70 wird über die BOU ein Bremsvorgang eingeleitet. Dabei wird in einem Schritt 72 das Einlaßventil 22 angesteuert. Der Speicher befindet sich (Schritt 74) in einem geladenen Zustand. In einem Schritt 76 wird überprüft, ob der Druck an dem Drucksensor 20 in Ordnung ist. Ist dies der Fall, ist der Speicher 12 funktionsfähig (Schritt 78).

Wird in dem Schritt 76 festgestellt, daß der Druck nicht den Vorgaben entspricht bzw. der Druck in einem Schritt 80 einbricht, ist festzustellen (Schritt 82), daß der Speicher 12 nicht funktionsfähig ist. Dann erfolgt in einem Schritt 84 das Abschalten, d.h. die Bremse geht in den Back-up.

Wenn sich der geladene Speicher 12 während der Fahrt in der oberen Stellung 34 befindet und Leckagen auftreten, wird der Speicher 12, sobald dieser die Stellung 36 erreicht, wieder mittels der Pumpe 14 aufgeladen. Der Speicher 12 ist auf diese Weise immer betriebsbereit.

Ist der Metallfaltenbalg 31 jedoch gerissen, hat dies zur Folge, daß der Speicher zwar stets aufgeladen ist, der Metallfaltenbalg 31 sich aber in der Endlage 38 befindet. Wird nunmehr Bremsflüssigkeit zum Bremsen benötigt, wie dies durch Ansteuern des Einlaßventils 22 angezeigt ist, bricht an dem Drucksensor 20 der Druck kurzzeitig zusammen, weil die Pumpe 14 die Bremsflüssigkeit nicht schnell genug nachliefern kann, wenn diese sofort mit dem Bremsvorgang angesteuert wird.

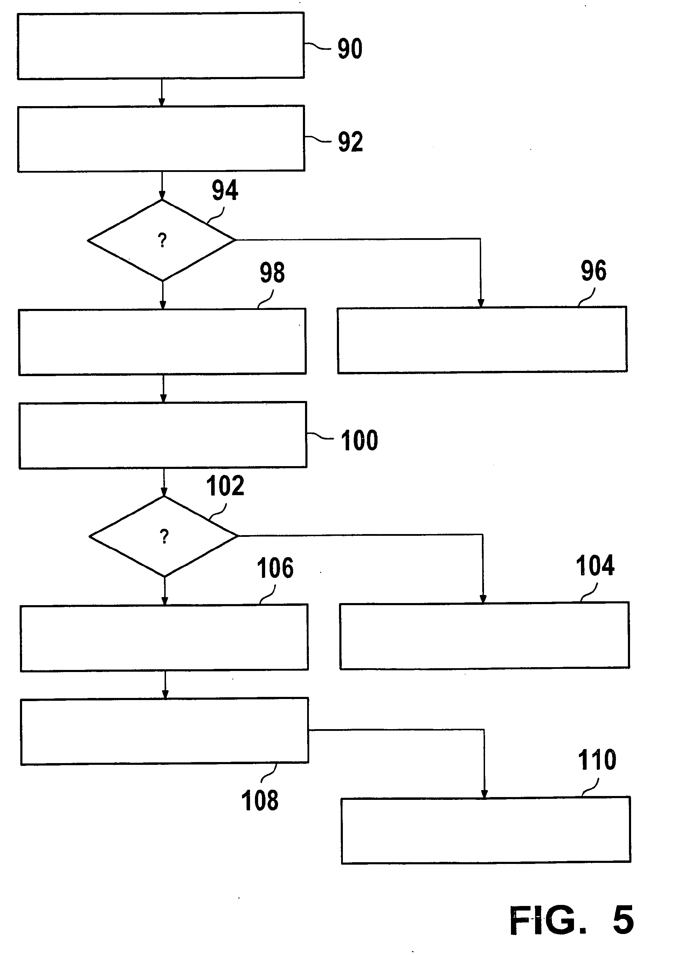

In Figur 5 ist das erfindungsgemäße Verfahren bei mehrmaligem kurzzeitigen Bremsen, bei dem der Speicher 12 aufgebraucht wird, verdeutlicht. Dieses mehrmalige Bremsen wird in einem Schritt 92 von dem Pedalweggeber erkannt.

In einem Schritt 94 erfolgt die Überprüfung des Drucks. Ist dieser in Ordnung, wird in einem Schritt 96 festgestellt, daß der Speicher 12 funktionsbereit ist.

Werden in einem Schritt 98 Einbrüche festgestellt, wird zur Überprüfung der Funktionsfähigkeit des Speichers 12, sobald der Speicherdruck wieder angestiegen ist oder nach Beendigung des Bremsvorgangs, das Einlaßventil 22 in einem Schritt 100 erneut kurz angesteuert.

Daraufhin erfolgt in einem Schritt 102 abermals die Überprüfung des Speicherdrucks. Ist dieser in Ordnung, erfolgt in einem Schritt 104 die Feststellung, daß der Speicher 12 betriebsfähig ist.

Bricht der Druck an dem Drucksensor 20 jedoch infolge des Ansteuerns des Einlaßventils 22 ein (Schritt 106), muß festgestellt werden, daß der Speicher 12 nicht betriebsfähig ist (Schritt 108). Es erfolgt in einem Schritt 110 das Abschalten.

Ist in dem dargestellten Fall der Speicher 12 durch in dem Schritt 90 erfolgtes mehrmaliges Bremsen geleert, befindet sich der Metallfaltenbalg 31 in der Endlage 38. Der Druck am Drucksensor 20 zeigt Unregelmäßigkeiten durch kurze Einbrüche.

Über den Pedalweggeber der BOU wurde dieses mehrmalige kurzzeitige Bremsen jedoch erkannt (Schritt 92), so daß die Signale des Drucksensors 20 zunächst zu erklären sind. Um jedoch die Betriebsfähigkeit des Speichers 12 zu überprüfen, wird nach Beendigung des Bremsvorgangs das Einlaßventil 22 kurz angesteuert (Schritt 100). Meldet der Drucksensor 20 keinen Einbruch, ist der Speicher 12 in Ordnung.

Diese Überprüfung kann auch während eines Bremsvorgangs durch Ansteuern des Einlaßventils 22 durchgeführt werden, wenn der Speicherdruck während des Bremsvorgangs wieder ansteigt.

## Patentansprüche

1. Verfahren zur Speicherüberwachung in einem Speicherladesystem (12) eines Bremssystems (10), bei dem ein Einlaßventil (22) des Bremssystems (10) angesteuert und mit einem Drucksensor (20) überprüft wird, ob das Ansteuern einen Druckeinbruch in dem Speicherladesystem (12) bewirkt.

2. Verfahren nach Anspruch 1, das beim Starten eines Fahrzeugs durchgeführt wird.

3. Verfahren nach Anspruch 1, das während der Fahrt eines Fahrzeugs durchgeführt wird.

4. Verfahren nach Anspruch 3, das nach Ende eines Bremsvorgangs durchgeführt wird.

5. Verfahren nach Anspruch 3, das während eines Bremsvorgangs durchgeführt wird.

6. Verfahren nach einem der Ansprüche 1 bis 5, bei dem als Speicherladesystem (12) ein Metallfaltenbalgspeicher (12) verwendet wird.

7. Verfahren nach einem der Ansprüche 1 bis 6, bei dem bei Feststellen eines Druckeinbruchs eine Servoabschaltung des Bremssystems (10) erfolgt.

8. Verfahren nach einem der Ansprüche 1 bis 7, bei dem der Drucksensor (20) eine Eigenüberwachung aufweist.

9. Verfahren nach einem der Ansprüche 1 bis 7, bei dem ein zweiter Drucksensor verwendet wird.

10. Bremssystem mit einem Steuergerät (26), einem Speicherladesystem (12), einem Einlaßventil (22), einer Pumpe (14) und einem Drucksensor (20), wobei das Steuergerät (26) so ausgelegt ist, daß dieses das Einlaßventil (22) ansteuert und mittels des Drucksensors (20) überwacht, ob das Ansteuern einen Druckabfall in dem Speicherladesystem (12) bewirkt.

11. Bremssystem nach Anspruch 10, bei dem als Speicherladesystem (12) ein Metallfaltenbalgspeicher (12) vorgesehen ist.

12. Bremssystem nach Anspruch 10 oder 11, bei dem der Drucksensor (20) eine Eigenüberwachung aufweist.

13. Bremssystem nach Anspruch 10 oder 11, bei dem ein zweiter Drucksensor vorgesehen ist.

14. Computerprogramm mit Programmcodemitteln, um alle Schritte eines Verfahrens nach einem der Ansprüche 1 bis 9 durchzuführen, wenn das Computerprogramm auf einem Computer oder eine entsprechenden Recheneinheit, insbesondere einer elektronischen Recheneinheit in einem Steuergerät (26) eines Bremssystems (10) gemäß Anspruch 10, ausgeführt wird.

15. Computerprogrammprodukt mit Programmcodemitteln, die auf einem computerlesbaren Datenträger gespeichert sind, um ein Verfahren nach einem der Ansprüche 1 bis 9 durchzuführen, wenn das Computerprogramm auf einem Computer oder auf einer entsprechenden Recheneinheit, insbesondere einer elektronischen Recheneinheit in einem Steuergerät (26) eines Bremssystems (10) gemäß Anspruch 10, ausgeführt wird.
